# EUROPÄISCHE PATENTSCHRIFT

(11) **EP 2 271 179 B1**
(45) Veröffentlichungstag und Bekanntmachung des Hinweises auf die Patenterteilung: **02.10.2013**
(21) Anmeldenummer: 10005621.7
(22) Anmeldetag: 29.05.2010
(51) Int. Cl.: H05B 33/08

(54) **Schaltungsanordnung zur Ansteuerung von Licht emittierenden Dioden**
Circuit configuration for controlling light emitting diodes
Dispositif de commutation destiné à la commande de diodes luminescentes

(30) Priorität: 24.06.2009 DE 102009030174
(43) Veröffentlichungstag der Anmeldung: 05.01.2011
(73) Patentinhaber: INIT Innovative Informatikanwendungen in Transport-, Verkehrs- und Leitsystemen GmbH, 76131 Karlsruhe (DE)
(72) Erfinder: Ellmann, Jan, 76131 Karlsruhe (DE); Gültig, Michael, 76297 Stutensee (DE); Pados, Martin, 76275 Ettlingen (DE)
(74) Vertreter: Dimmerling & Huwer

(56) Entgegenhaltungen:
- WO-A1-2008/084439
- US-A1- 2007 171 159
- US-B1- 6 724 158

## Beschreibung

Die Erfindung betrifft eine Schaltungsanordnung-gemäß dem Oberbegriff des Anspruchs 1.

Eine derartige Schaltungsanordnung zur Ansteuerung von in Gruppen zusammengefassten LED ist aus US 6 724 158 B1 bekannt. Sie hat einen Treiber, welcher Ausgänge aufweist, mittels welcher Strom an die LED lieferbar ist. Die Schaltungsanordnung hat eine Pulsweitenmodulationseinrichtung mit einem Steuereingang, mittels welchem der an die LED lieferbare Strom einstellbar ist. Der Steuereingang ist mit dem Ausgang einer Spannungsquelle verbunden, die ein Potentiometer aufweist, das mit einem ersten Anschluss auf Massepotential und mit einem zweiten Anschluss auf einem konstanten Referenzpotential liegt.

Bei dieser Schaltungsanordnung kann die Helligkeit der am Ausgang des Pulsweitenmodulators angeschlossenen LED durch Verstellen des Potentiometers eingestellt werden. Dabei verändert sich sowohl die Pulsweite auch die Frequenz der Ansteuerpulse für die LED.

Bei einer Anzeigetafel, die mehrere Gruppen von LED aufweist, kann die aus Dokument D1 bekannte Schaltungsanordnung für jede dieser Gruppen jeweils vorhanden sein, so dass Helligkeit der einzelnen LED-Gruppen individuell eingestellt werden kann. Dadurch ist es insbesondere möglich, die Helligkeit der LED-Gruppen so aneinander anzupassen, so dass die Anzeigetafel gleichmäßig hell leuchtet.

Häufig soll jedoch die Helligkeit der Anzeigetafel auch an die Umgebungshelligkeit angepasst werden. Die Einstellung der Gesamthelligkeit ist jedoch bei der aus US 6 724 158 B1 bekannten Schaltungsanordnung mit einem gewissen Aufwand verbunden, weil die Potentiometer der einzelnen LED-Gruppen getrennt voneinander verstellt werden müssen.

Aus dem Stand der Technik ist auch eine Schaltungsanordnung zur Ansteuerung von in Gruppen zusammengefassten LED bekannt, mit wenigstens einem Treiber, welcher Ausgänge hat, mittels welcher Strom an die LED lieferbar ist. Diese Schaltungsanordnung wird zur Ansteuerung von LED einer Anzeigetafel verwendet. Als Treiber, mittels welcher beispielsweise eine Gruppe von sechzehn LED angesteuert beziehungsweise mit Strom versorgt werden, gibt es eine Vielzahl unterschiedlicher Typen. Allen Typen gemeinsam ist, dass der an die LED gelieferte Strom mittels eines Widerstands, welcher an dem Steuereingang angeschlossen ist, eingestellt werden kann.

Soll die Helligkeit einer LED-Gruppe, das heißt die Helligkeit, mit der vom Treiber angesteuerte LED der LED-Gruppe leuchten, verändert werden, muss der Widerstandswert verändert werden. Hierzu kann der Widerstand als Potentiometer ausgebildet sein.

Da die Helligkeit der LED-Gruppen häufig an die Umgebung angepasst werden muss, in der sich die LED-Gruppe befindet, ist eine entsprechende Justage des Widerstandswerts erforderlich. Dies ist insbesondere dann recht aufwendig, wenn eine Vielzahl von LED-Gruppen zu einer Anzeigetafel zusammengefasst ist.

Ein großes Problem bei der Justage der Helligkeit einer LED-Gruppe (beziehungsweise des Ausgangsstromes des betreffenden Treiberbausteins) beispielsweise einer Anzeigetafel besteht insbesondere darin, dass man sich beim Verändern des Widerstandswertes in Reichweite des Widerstands beziehungsweise des Treibers und damit der LED-Gruppe befinden muss, was zur Folge hat, dass man die Helligkeitsveränderung visuell nicht zufrieden stellend verfolgen kann. Will man beispielsweise die Helligkeit einer LED-Gruppe verändern, um die Helligkeit der neuen LED-Gruppe an die Helligkeit der benachbarten LED-Gruppen anzupassen, wie dies insbesondere bei einem Austausch einer defekten LED-Gruppe gegen eine neue LED-Gruppe erforderlich sein kann, ist es in der Regel erforderlich, dass man sich nach dem Verändern des Widerstandswertes von der Anzeigetafel entfernt, um hierdurch die Helligkeit der neuen LED-Gruppe im Verhältnis zur Helligkeit der benachbarten LED-Gruppen visuell besser beurteilen zu können. Ist die Helligkeit noch nicht korrekt, muss man sich erneut zur Anzeigetafel begeben, um den Widerstandswert zu verändern, woraufhin man sich zur Kontrolle wieder von der Anzeigetafel entfernen muss. Dies muss so lange wiederholt werden, bis die Helligkeit korrekt ist. Diese Vorgehensweise ist sehr unbefriedigend.

Ein weiteres Problem bei der bekannten Ansteuerung von LED besteht darin, dass die Helligkeit der LED im laufenden Betrieb nicht veränderbar ist. So ist es beispielsweise bisher nicht möglich, die Helligkeit der LED im laufenden Betrieb problemlos an das Umgebungslicht anzupassen. Die auf einer Anzeigetafel angeordneten LED leuchten beispielsweise bei hell scheinender Mittagssonne mit derselben Helligkeit wie nachts bei Mondschein.

Es ist Aufgabe der Erfindung, eine eingangs genannte Schaltungsanordnung derart auszubilden, dass die Helligkeit einer LED-Gruppe einfacher einstellbar sowie im laufenden Betrieb auf einfache Weise veränderbar ist.

Diese Aufgabe wird mit den Merkmalen des Anspruchs 1 gelöst. Vorteilhafte Weiterbildungen der Erfindung ergeben sich aus den Unteransprüchen.

Gemäß der Erfindung ist eine Schaltungsanordnung zur Ansteuerung von in Gruppen zusammengefassten Licht emittierenden Dioden (LED), mit wenigstens einem Treiber, welcher Ausgänge hat, mittels welcher Strom an die LED lieferbar ist, sowie einen Steuereingang hat, mittels welchem der an die LED lieferbare Strom einstellbar ist, dadurch gekennzeichnet, dass der Steuereingang mit dem Ausgang einer Spannungsquelle verbunden ist.

Dadurch, dass der Steuereingang des Treibers mit dem Ausgang einer Spannungsquelle verbunden ist, lässt sich der an die LED gelieferte Strom und damit die Helligkeit der von dem Treiber mit Strom versorgten LED auf einfache Weise einstellen. Besonders vorteilhaft ist es, wenn die Spannungsquelle steuerbar ist.

Zum Einstellen der Spannung der Spannungsquelle braucht man sich nicht in unmittelbarer Nähe der Spannungsquelle befinden, da es zum Einstellen der Spannung einer Spannungsquelle nicht erforderlich ist, manuell ein Bauelement zu verstellen. Die Spannung einer Spannungsquelle kann auf einfache Weise durch Verändern elektrischer Größen wie Strom oder Spannung eingestellt werden. Es ist daher möglich, die Spannung der Spannungsquelle derart zu regeln, dass sie einen von der Helligkeit benachbarter LED abhängigen Wert annimmt. Insbesondere lässt sich die Spannung einer Spannungsquelle auf einfache Weise mittels einer Fernbedienung einstellen, wobei die Fernbedienung drahtgebunden oder drahtlos mit der Spannungsquelle verbunden sein kann. Hierdurch ist es in vorteilhafter Weise möglich, die Auswirkungen einer Veränderung der von der Spannungsquelle an den Steuereingang des Treibers angelegten Spannung auf die Helligkeit der LED unmittelbar visuell zu verfolgen. Dies erleichtert die Anpassung der Helligkeit der LED an ihre Umgebung erheblich.

Besonders vorteilhaft ist, dass der Steuereingang der Spannungsquelle mit einem einstellbaren Spannungsteiler verbunden ist, dessen an ihn angelegte Gesamtspannung einstellbar ist. Hierdurch besteht die Möglichkeit, die Ausgangsspannung der Spannungsquelle und damit die Helligkeit der LED mittels des Spannungsteilers zunächst bei einer an den Spannungsteiler angelegten vorbestimmten Gesamtspannung derart einzustellen, dass die Helligkeit der LED einem Grundwert entspricht, mit dem die Anzeigetafel betrieben wird. Der Spannungsteiler wird hierbei so eingestellt, dass die Grundhelligkeit der Grundhelligkeit der benachbarten LED entspricht. Als Grundhelligkeit wird in vorteilhafter Weise ein Wert angenommen, bei dem durch die LED etwa die Hälfte des maximal zulässigen Stroms fließt.

Ändert sich beispielsweise durch Sonnenschein das Umgebungslicht, kann die am Spannungsteiler anliegende Gesamtspannung erhöht werden. Hierdurch erhöht sich auch die vom Spannungsteiler abgegebene und somit die von der Spannungsquelle abgegebene Spannung und damit der durch die LED fließende Strom und damit die Helligkeit der LED. Sind mehrere Boards zu einer Anzeigetafel zusammengefasst, lässt sich die Helligkeit aller LED gleichmäßig durch Verändern der an den betreffenden Spannungsteilern anliegenden Gesamtspannung verändern. Durch Verändern der Gesamtspannung lässt sich des Weiteren auf einfache Weise auch die von einer Anzeigetafel aufgenommene Leistung beeinflussen. Hierdurch ist es möglich, die Anzeigetafel mit einem intelligenten Energiemanagement zu betreiben.

Da sich herausgestellt hat, dass die Steuereingänge mehrerer Treiber an eine gemeinsame Spannungsquelle angeschlossen werden können, wie dies bei einer weiteren besonderen Ausführungsform der Fall ist, besteht in vorteilhafter Weise die Möglichkeit, mehrere LED-Gruppen zu einem Board zusammenzufassen und die Steuereingänge der Treiber der auf dem Board angeordneten LED an eine gemeinsame Spannungsquelle anzuschließen. Hierdurch lässt sich auf einfache Weise die Helligkeit einer Vielzahl von LED gemeinsam einstellen.

Es ist dann zwar nicht mehr möglich, die Helligkeit der zu einem Board zusammengefassten LED untereinander zu verändern, jedoch stellt dies in der Regel kein Problem dar, da die LED in der Regel aus einer einzigen Fertigungscharge stammen und daher im Wesentlichen gleiche Eigenschaften aufweisen. Das heißt, die Helligkeit der zu einem Board zusammengefassten LED weicht untereinander nahezu nicht ab.

Muss jedoch nach Verstreichen einer längeren Zeit ein Board ausgewechselt werden, weicht die Helligkeit der auf dem neuen Board angeordneten LED aufgrund der Alterung der übrigen LED in der Regel von der Helligkeit der benachbarten LED ab, weshalb eine Anpassung der Helligkeit erfolgen muss. Denn um eine qualitativ hochwertige Anzeige zu erhalten, müssen die LED-Gruppen in ihrer Grundhelligkeit untereinander angepasst werden. Da eine Anzeigetafel häufig mehr als tausend LED-Gruppen aufweisen kann, ist der Aufwand zum Anpassen der Grundhelligkeit der LED-Gruppen entsprechend groß.

Mittels der erfindungsgemäßen Schaltungsanordnung lässt sich insbesondere bei einer Anzeigetafel mit einer Vielzahl von in Gruppen zusammengefassten LED eine Anpassung der Helligkeit eines neuen Boards sehr einfach vornehmen. Hierbei ist es besonders vorteilhaft, dass die Steuerung der Spannungsquelle mittels einer Fernbedienung vorgenommen werden kann.

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigt:
- Fig. 1: eine Ausführungsform einer erfindungsgemäßen Schaltungsanordnung und
- Fig. 2: eine schematische Darstellung einer Anzeigetafel.

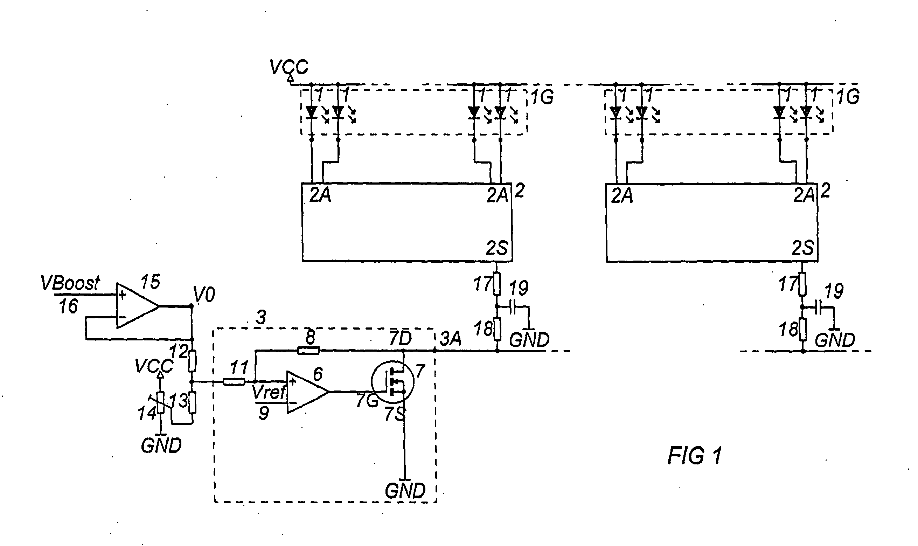

Wie Fig. 1 entnommen werden kann, wird jeweils eine Gruppe 1G von insgesamt sechzehn LED 1 von einem Treiber 2, an dessen entsprechenden Ausgängen 2A die LED 1 angeschlossen sind, gesteuert. Der jeweilige Treiber 2, welcher beispielsweise ein Low Voltage 16-Bit Constant Current LED Sink Driver SDP 16CP596 der Firma ST sein kann, hat des Weiteren einen Steuereingang 2S, welcher mit dem Ausgang 3A einer Spannungsquelle 3 verbunden ist. Insgesamt können beispielsweise sechzig LED-Gruppen 1 G zu einem Board zusammengefasst und von einer gemeinsamen Spannungsquelle 3 gesteuert werden. Zur Störungsunterdrückung und Grundeinstellung des von dem Treiber 2 an die LED 1 gelieferten Stroms erfolgt die Verbindung des Steuereingangs 2S des Treibers 2 mit dem Ausgang 3A der Spannungsquelle 3 über ein RC-Netzwerk 17, 18, 19.

Die Spannungsquelle 3 ist auf herkömmliche Weise ausgebildet und weist einen ersten Operationsverstärker 6 auf, dessen Ausgang mit dem Gate-Anschluss 7G eines Feldeffekttransistors 7 verbunden ist und somit den Feldeffekttransistor 7 ansteuert. Der Drain-Anschluss 7D des Feldeffekttransistors 7, der zugleich den Ausgang 3A der Stromquelle 3 bildet, ist über einen Widerstand 8 mit dem Plus-Eingang des ersten Operationsverstärkers 6 verbunden. Der Source-Anschluss 7S des Feldeffekttransistors 7 ist mit Masse verbunden. Am Minus-Eingang des ersten Operationsverstärkers 6 wird eine selbstgenerierte Referenzspannung V_{Ref} angeschlossen. Die konstante Referenzspannung V_{Ref} und die Werte der in diesem Schaltungsteil genutzten Bauteile (z. B. Widerstandswerte) wurden so gewählt, dass bei einem bestimmten analogen Wert der Eingangsspannung V_{Boost} sich die gewünschte zugehörige analoge Spannung am Stelleingang 2S der Treiber 2 ergibt. Der erste Operationsverstärker 6 arbeitet hierbei in Kombination mit dem Feldeffekttransistor 7 als invertierender Verstärker.

Der Plus-Eingang des ersten Operationsverstärkers 6 ist über einen Widerstand 11 mit einem aus zwei Widerständen 12, 13 und einem Potentiometer 14 bestehenden Spannungsteiler verbunden. Der Spannungsteiler wird gespeist von einem zweiten Operationsverstärker 15, dessen Plus-Eingang einen Boost-Eingang 16 der Spannungsquelle 3 darstellt. Der Minus-Eingang des zweiten Operationsverstärkers 15 ist mit dem Ausgang des zweiten Operationsverstärkers 15 verbunden.

In Abhängigkeit der am Boost-Eingang 16 liegenden Spannung V_{Boost} lässt sich die von der Spannungsquelle 3 an die Eingänge 2S der Treiber 2 angelegte Spannung einstellen. Eine bei einer ersten vorbestimmten Spannung V_{Boost} am Boost-Eingang 16 von der Spannungsquelle 3 an die Steuereingänge 2S der Treiber 2 angelegte Grundspannung lässt sich mittels des Potentiometers 14 einstellen. Das heißt, mittels des Potentiometers 14 lässt sich die bei der ersten vorbestimmten Spannung V_{Boost} vorhandene Helligkeit der von den betreffenden Treibern 2 angesteuerten LED an die bei derselben ersten vorbestimmten Spannung V_{Boost} vorhandene Helligkeit benachbarter LED, deren Treiber von einer anderen Spannungsquelle gesteuert werden, anpassen.

Die erste vorbestimmte Spannung V_{Boost} ist so gewählt, dass die LED 1 mit einem Strom betrieben werden, der etwa der Hälfte ihres maximal zulässigen Stroms entspricht. Soll die Helligkeit der LED 1 erhöht werden, weil sich beispielsweise die Helligkeit des Umgebungslichts erhöht hat, wird die Spannung V_{Boost} entsprechend erhöht. Hierdurch erhöht sich die am Spannungsteiler anliegende Gesamtspannung V₀, was zur Folge hat, dass sich die von der Spannungsquelle 3 an die Treiber 2 angelegte Spannung erhöht, wodurch die mit dem Ausgang 3A der Spannungsquelle 3 verbundenen Treiber 2 alle gleichmäßig den Strom durch die entsprechenden angesteuerten LED 1 vergrößern, was eine gleichmäßige Helligkeitsänderung der betreffenden LED zur Folge hat.

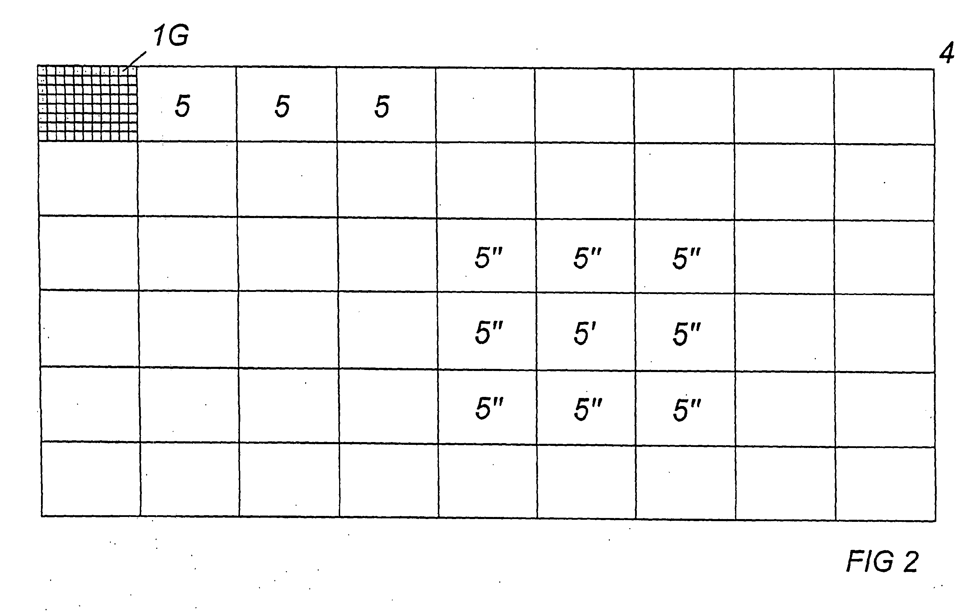

Wie Fig. 2 entnommen werden kann, besteht eine Anzeigetafel 4 aus einer Vielzahl von Boards 5, welche jeweils eine Vielzahl von aus sechzehn LED bestehenden Gruppen aufweist. So kann eine Anzeigetafel 4 beispielsweise sechs bis sechzig Boards aufweisen, wobei ein Boards beispielsweise sechzig jeweils aus sechzehn LED bestehenden Gruppen aufweist.

Soll beispielsweise das in Fig. 2 mit 5' bezeichnete Board durch ein neues Board ersetzt werden, wird nach dem Austauschen des Boards 5' die Helligkeit der sich auf dem Board 5' befindlichen LED mittels des Potentiometers 14 bei derselben vorbestimmten Spannung V_{Boost} an die Helligkeit der benachbarten Boards 5" angepasst.

## Patentansprüche

1. Schaltungsanordnung zur Ansteuerung von in Gruppen (1G) zusammengefassten, Licht emittierenden Dioden (LED) (1), mit wenigstens einem Treiber (2), welcher Ausgänge (2A) hat, mittels welcher Strom an die LED (1) lieferbar ist, sowie einen Steuereingang (2S) hat, mittels welchem der an die LED (1) lieferbare Strom einstellbar ist, wobei der Steuereingang (2S) mit dem Ausgang (3A) einer Spannungsquelle (3) verbunden ist,
**dadurch gekennzeichnet,**
**dass** die Spannungsquelle (3) einen Steuereingang (3S) hat, mittels dem die Ausgangsspannung der Spannungsquelle (3) steuerbar ist, und dass der Steuereingang (3S) der Spannungsquelle (3) mit einem einstellbaren Spannungsteiler (12, 13, 14) verbunden ist, dessen Gesamtspannung (V₀) einstellbar ist.

2. Schaltungsanordnung nach Anspruch 1,
**dadurch gekennzeichnet,**
**dass** die Steuereingänge (2S) mehrerer Treiber (2) an eine gemeinsame Spannungsquelle (3) angeschlossen sind.

3. Anzeigetafel (4) mit einer Vielzahl von in Gruppen (1G) zusammengefassten LED (1),
**dadurch gekennzeichnet,**
**dass** die LED (1) mit einer Schaltungsanordnung gemäß Anspruch 1 oder 2 angesteuert werden.

## Claims

1. A circuit configuration for controlling light-emitting diodes (LEDs) (1), which are assembled into groups (1G), having at least one driver (2), which has outputs (2A), by means of which current is deliverable to the LEDs (1), and also has a control input (2S), by means of which the current deliverable to the LEDs (1) is settable, wherein the control input (2S) is connected to the output (3A) of a voltage source (3), **characterized in that** the voltage source (3) has a control input (3S), by means of which the output voltage of the voltage source (3) is controllable, and the control input (3S) of the voltage source (3) is connected to a settable voltage divider (12, 13, 14), whose total voltage (V0) is settable.

2. The circuit configuration according to claim 1,
**characterized in that** the control inputs (2S) of a plurality of drivers (2) are connected to a shared voltage source (3).

3. A display panel (4) having a plurality of LEDs (1) assembled into groups (1G), **characterized in that** the LEDs (1) are controlled using a circuit configuration according to claim 1 or 2.

## Revendications

1. Arrangement de circuit pour commander des diodes électroluminescentes (LED) (1) assemblées en groupes (1G), comprenant au moins un circuit d'attaque (2) qui possède des sorties (2A) au moyen desquelles du courant peut être délivré aux LED (1), et qui possède aussi une entrée de commande (2S) au moyen de laquelle le courant pouvant être délivré aux LED (1) peut être réglé, l'entrée de commande (2S) étant reliée avec la sortie (3A) d'une source de tension (3),
**caractérisé en ce que** la source de tension (3) possède une entrée de commande (3S) au moyen de laquelle peut être commandée la tension de sortie de la source de tension (3), et **en ce que** l'entrée de commande (3S) de la source de tension (3) est reliée avec un diviseur de tension réglable (12, 13, 14) dont la tension totale (V₀) est réglable.

2. Arrangement de circuit selon la revendication 1, **caractérisé en ce que** les entrées de commande (2S) de plusieurs circuits d'attaque (2) sont raccordées à une source de tension (3) commune.

3. Tableau d'affichage (4) comprenant une pluralité de LED (1) assemblées en des groupes (1G), **caractérisé en ce que** les LED (1) sont commandées par un arrangement de circuit selon la revendication 1 ou 2.
